# EUROPÄISCHE PATENTSCHRIFT

(11) **EP 2 054 252 B1**
(45) Veröffentlichungstag und Bekanntmachung des Hinweises auf die Patenterteilung: **16.12.2009**
(21) Anmeldenummer: 08715817.6
(22) Anmeldetag: 16.02.2008
(51) Int. Cl.: B60J 1/17

(54) **KRAFTFAHRZEUG MIT HINTEREN SEITENSCHEIBEN**
MOTOR VEHICLE HAVING REAR SIDE WINDOWS
VÉHICULE AUTOMOBILE AVEC DES VITRES LATÉRALES ARRIÈRE

(30) Priorität: 24.02.2007 DE 102007009115
(43) Veröffentlichungstag der Anmeldung: 06.05.2009
(73) Patentinhaber: Bayerische Motoren Werke Aktiengesellschaft, 80809 München (DE)
(72) Erfinder: HOLZ, Andreas, 85551 Kirchheim (DE)
(86) Internationale Anmeldenummer: PCT/EP2008/001217
(87) Internationale Veröffentlichungsnummer: WO 2008/101641

(56) Entgegenhaltungen:
- DE-A1-102004 063 513
- FR-A- 2 605 558
- FR-A- 2 783 467

## Beschreibung

Die Erfindung betrifft ein Kraftfahrzeug mit hinteren Seitenscheiben gemäß dem Oberbegriff des Anspruchs 1. Ein solches Kraftfahrzeug ist aus DE 10 2004 063 513 bekannt.

Es ist bereits ein Kraftfahrzeug mit einer Karosserie bekannt, bei der zu beiden Seiten jeweils nur eine vordere Säule oder A-Säule vorgesehen ist, wie dies beispielsweise bei einem Cabriolet oder einem Coupé der Fall ist.

Ferner ist es bekannt, auf jeweils einer Seite der Karosserie in der jeweiligen Seitenwand nur eine Türausschnittsöffnung für jeweils eine Seitentür vorzusehen. Die jeweilige Seitentür weist eine vordere Seitenscheibe auf, die über Betätigungsvorrichtungen in einen Hohlraum eines Türkörpers aus einer ausgefahrenen Position in eine eingefahrene Position und zurück versenkbar sind.

Bei einem derartigen Fahrzeug ist die vordere Seitenscheibe rahmenlos an dem Türkörper befestigt. In einem an die jeweilige Türausschnittsöffnung sich anschließenden Karosserieabschnitt ist eine hintere Seitenscheibe vorgesehen, die in einen Hohlraum des Karosserieabschnittes über eine Betätigungsvorrichtung aus einer ausgefahrenen Position in eine in dem Hohlraum befindliche, eingefahrene Position bewegbar ist.

An einem zur vorderen Seitenscheibe angrenzenden Rand der hinteren Seitenscheibe ist ein Steg angeordnet, der zur Führung und Abdichtung der vorderen Scheibe und zur Halterung und Abdichtung der hinteren Seitenscheibe dient. Die hintere Seitenscheibe weist einen unteren, nicht sichtbaren Abschnitt auf, der sich ständig im Hohlraum des Karosserieabschnittes befindet.

Zur Betätigung der hinteren Seitenscheibe weist die hintere Seitenscheibe am unteren, nicht sichtbaren Rand eine Durchgangsöffnung auf, in der die hintere Seitenscheibe über eine Schraubverbindung mit der Betätigungsvorrichtung verbunden ist. Die Betätigungsvorrichtung ist an einer Innenwand des Hohlraumes des Karosserieabschnittes zur Übertragung von Kräften befestigt.

Aufgabe der Erfindung ist es, ein Kraftfahrzeug zu schaffen, bei dem eine hintere Seitenscheibe einen verbesserten Aufbau aufweist.

Diese Aufgabe wird durch die Merkmale des Anspruchs 1 gelöst.

Bei einem erfindungsgemäßen Kraftfahrzeug sind zu beiden Seiten der Karosserie hintere Seitenscheiben ausgebildet, die jeweils an vordere, rahmenlose Seitenscheiben angrenzen. Die jeweilige hintere Seitenscheibe weist an einem vorderen Rand einen Führungssteg auf. An dem Führungssteg liegt ein hinterer Rand einer vorderen Seitenscheibe an, wenn die vordere Seitenscheibe und die hintere Seitenscheibe sich in einer ausgefahrenen Position befinden. Die jeweilige hintere Seitenscheibe weist in der ausgefahrenen Position einen sichtbaren Bereich auf, während ein nicht sichtbarer Bereich der hinteren Seitenscheibe in einem Hohlraum eines Karosseriebauteils angeordnet ist.

Bei der erfindungsgemäßen hinteren Seitenscheibe ist an einer Fläche der hinteren Seitenscheibe, die im nicht sichtbaren Bereich der hinteren Seitenscheibe liegt, und die benachbart zu dem Führungssteg liegt, eine Befestigungsfolie aufgeklebt ist, die mit dem Führungssteg verbunden ist. Damit wird in einfacher Weise eine zusätzliche Verbindung des Führungssteges mit der hinteren Seitenscheibe erreicht.

In einer vorteilhaften Ausführungsform weist die Befestigungsfolie an einem vorderen Ende einen vorderen, führungsstegseitigen Abschnitt auf, an dem ein unteres Ende des Führungssteges befestigt ist. An den vorderen Abschnitt schließt sich ein hinterer Abschnitt der Befestigungsfolie an, der zur Befestigung an der hinteren Seitenscheibe dient.

Vorteilhafterweise ist die Befestigungsfolie so ausgelegt, dass nach einer Zerstörung der hinteren Seitenscheibe an der Befestigungsfolie Glasreste kleben bleiben, die einen Verdickungsabschnitt bilden. Die Größe und/oder Form der Befestigungsfolie ist so ausgelegt, dass der sich bildende Verdickungsabschnitt eine Dicke t hat, die größer ist als eine Spaltbreite b einer in den Hohlraum des Karosserieabschnittes führenden Durchgangsöffnung. Damit bleibt der Führungssteg auch nach einer Zerstörung der hinteren Seitenscheibe an seinem Anbringungsort mit der Karosserie verbunden.

Der hintere Abschnitt der Befestigungsfolie bildet vorteilhafterweise nach einer Zerstörung der hinteren Seitenscheibe den Verdickungsabschnitt.

In der hinteren Seitenscheibe ist in einer vorteilhaften Ausführungsform eine Durchgangsöffnung im nicht sichtbaren Bereich der hinteren Seitenscheibe ausgebildet. In der Durchgangsöffnung ist eine Schraubverbindung angeordnet. Die Schraubverbindung ist mit einer Betätigungsvorrichtung zum Bewegen der hinteren Seitenscheibe zwischen der ausgefahrenen Position und einer eingefahrenen Position verbunden.

Die Befestigungsfolie weist vorteilhafterweise einen Endabschnitt auf, der sich an den hinteren Abschnitt der Befestigungsfolie anschließt. Der Endabschnitt ist mit einer kreisförmigen Aussparung versehen. Ein Innendurchmesser d₃₁ der kreisförmigen Aussparung ist größer als ein Außendurchmesser D₂₅ der Schraubverbindung. Die kreisförmige Aussparung der Befestigungsfolie ist beabstandet zu der Schraubverbindung angeordnet. Vorteilhafterweise ist die kreisförmige Aussparung der Befestigungsfolie zentrisch zu der Schraubverbindung an der hinteren Seitenscheibe aufgeklebt. Nach einer Zerstörung der hinteren Seitenscheibe bleibt die Befestigungsfolie über die kreisförmige Aussparung an der Schraubverbindung hängen. Über die Verbindung mit der Befestigungsfolie bleibt der Führungssteg an seinem Anbringungsort mit der Karosserie verbunden.

Der hintere Abschnitt der Befestigungsfolie weist fingerförmige Abschnitte auf, die nach einer Zerstörung der hinteren Seitenscheibe den Verdickungsabschnitt bilden.

In einer vorteilhaften Ausführungsform ist der hintere Abschnitt der Befestigungsfolie als eine geschlossene Fläche ausgebildet. Alternativ kann der hintere Abschnitt der Befestigungsfolie fingerförmige Abschnitte oder dergleichen aufweisen.

Die Befestigungsfolie ist vorteilhafterweise aus Polyester, Polyurethan oder einem anderen geeigneten Material hergestellt.

Eine Ausführungsform der Erfindung wird nachstehend anhand der Zeichnungen beispielshalber beschrieben. Dabei zeigen:
- Fig. 1: eine Seitenansicht einer teilweise dargestellten Karosserie, aus der die Anordnung einer Seitentür mit einer vorderen Seitenscheibe und einer sich daran anschließenden hinteren Seitenscheibe hervorgeht,
- Fig. 2: eine Seitenansicht einer hinteren Seitenscheibe, die einen Führungssteg und eine mit dem Führungssteg am unteren Ende verbundene Folie aufweist, die sich im nicht sichtbaren Bereich der hinteren Seitenscheibe im eingebauten Zustand der hinteren Seitenscheibe befindet,
- Fig. 3: eine Seitenansicht einer ersten Ausführungsform einer Befestigungsfolie,
- Fig. 4: eine Schnittansicht längs der Linie I-I in der Fig. 2, aus der die Befestigung der Seitenscheibe, der Befestigungsfolie und des Führungssteges hervorgeht,
- Fig. 5: eine Seitenansicht einer hinteren Seitenscheibe entsprechend der Fig. 2, aus der eine zweite Ausführungsform einer Befestigungsfolie dargestellt ist,
- Zig. 6: eine Seitenansicht einer hinteren Seitenscheibe entsprechend der Fig. 2, aus der eine dritte Ausführungsform einer Befestigungsfolie ersichtlich ist,
- Fig. 7: eine Schnittansicht längs der Linie II-II in der Fig. 2, in der die Anordnung der hinteren Seitenscheibe in einem Hohlraum eines Karosserieabschnittes dargestellt ist und
- Fig. 8: eine Schnittansicht entsprechend der Fig. 7, in der die Halterung des Führungssteges durch die Befestigungsfolie nach einer Zerstörung des Fensterglases der hinteren Seitenscheibe abgebildet ist.

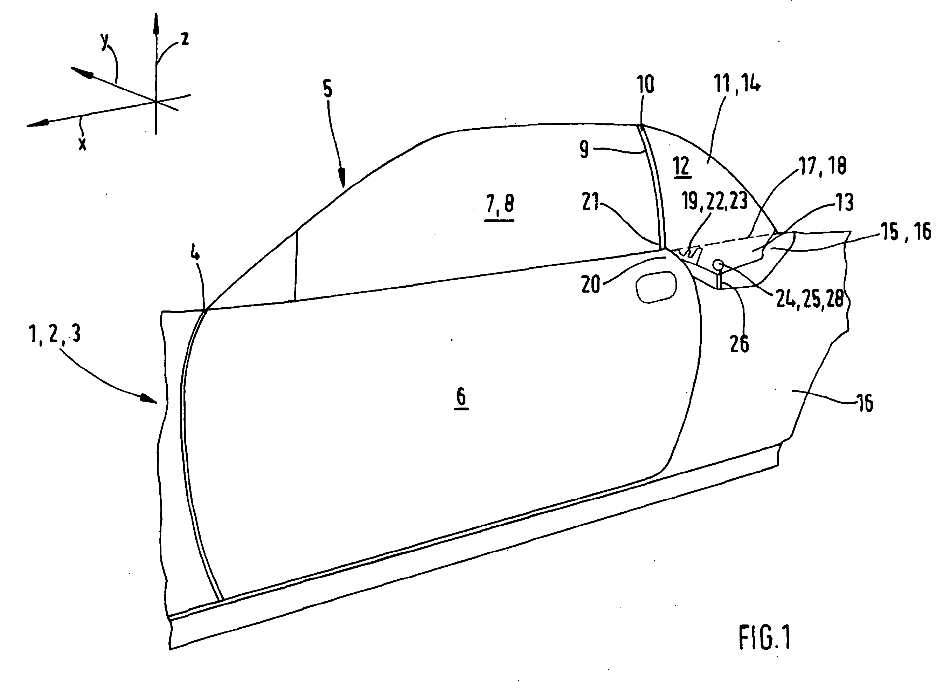

Die Fig. 1 zeigt eine teilweise dargestellte Seitenwand 3 einer Karosserie 2 eines nicht weiter dargestellten Kraftfahrzeuges, insbesondere eines Cabriolets oder eines Coupés.

Die Seitenwand 3 weist eine Türausschnittsöffnung 4 auf, in der eine Seitentür 5 verschwenkbar angeordnet ist. Die Seitentür 5 weist einen Türkörper 6 und eine vordere Seitenscheibe 7 auf. Die vordere Seitenscheibe 7 ist aus der in der Fig. 1 gezeigten ausgefahrenen Position 8 in einen nicht dargestellten Hohlraum des Türkörpers 6 in eine eingefahrene oder versenkte Position über eine nicht dargestellte Betätigungsvorrichtung in bekannter Weise bewegbar.

An einem in Bezug auf eine Fahrzeuglängsrichtung x hinteren Seitenrand 9 der vorderen Seitenscheibe 7, der sich im Wesentlichen in z-Richtung erstreckt, schließt sich ein Führungssteg 10 einer hinteren Seitenscheibe 11 an. Die hintere Seitenscheibe 11 weist einen sichtbaren Bereich 12 und einen nicht sichtbaren Bereich 13 auf. Zur Darstellung des nicht sichtbaren Bereiches 13 der hinteren Seitenscheibe 11 ist ein Teil eines hinteren Karosserieabschnittes 16 in der Fig. 1 weg geschnitten.

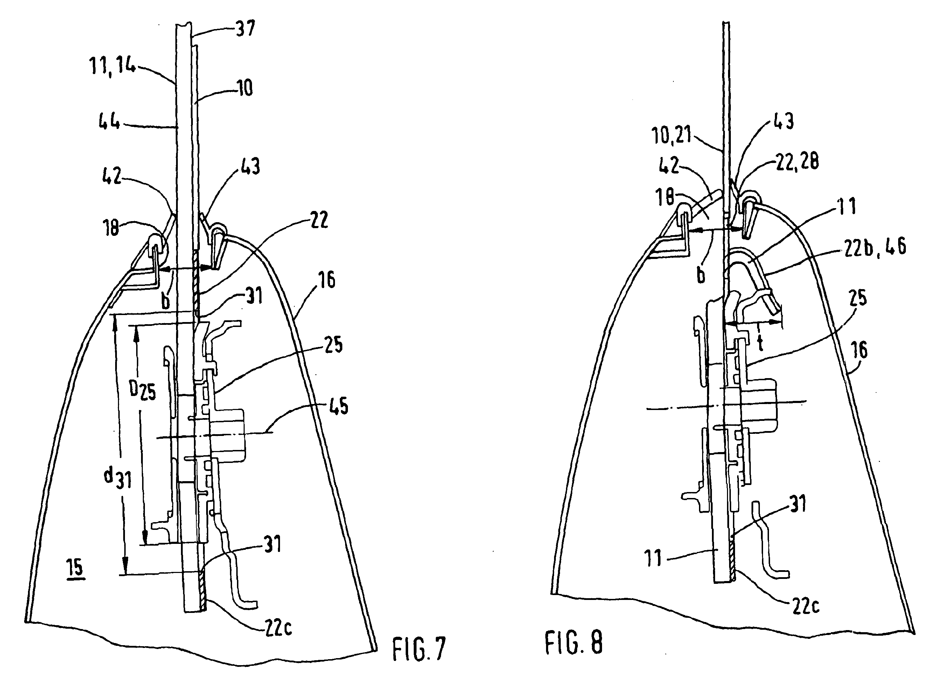

Der nicht sichtbare Bereich 13 der hinteren Seitenscheibe 11 befindet sich in der in der Fig. 1 gezeigten, ausgefahrenen Position 14 in einem in den Fig. 7 und 8 dargestellten Hohlraum 15 des hinteren Karosserieabschnittes 16, der sich an die Türausschnittsöffnung 4 anschließt.

In der Fig. 1 ist in strichlierten Linien ein Rand 17 einer Durchgangsöffnung 18 des Hohlraumes 15 dargestellt. Wie dies in der Fig. 1 gezeigt ist, weist die hintere Seitenscheibe 11 in der ausgefahrenen Position 14 an einem vorderen Abschnitt 19, benachbart zu einer oberen, hinteren Ecke 20 des Türkörpers 6 und unterhalb eines unteren Endes 21 des Führungssteges 10 eine Befestigungsfolie 22 auf.

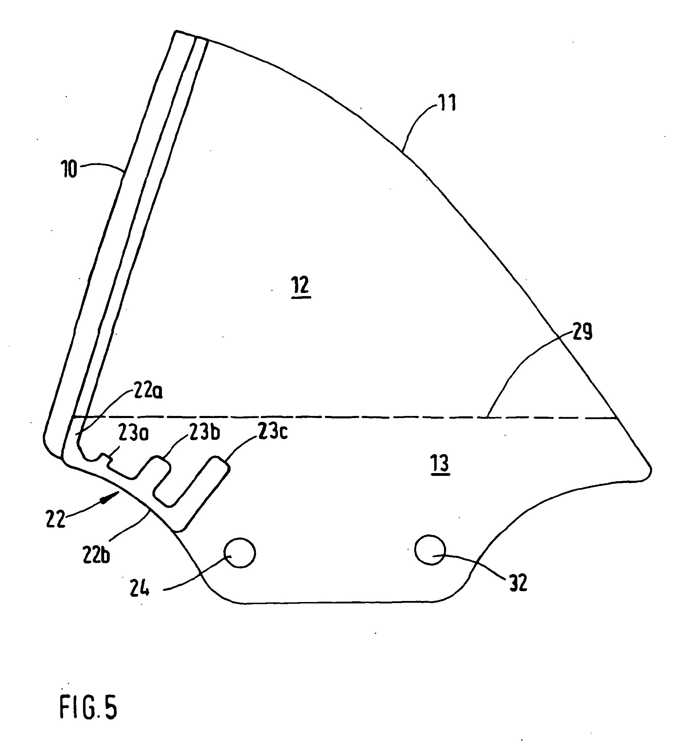

Die in der Fig. 1 gezeigte Ausführungsform einer Befestigungsfolie 22 ist mit drei fingerförmigen Abschnitten 23a, 23b, 23c versehen, wie dies vergrößert in der Fig. 5 dargestellt ist. Die Befestigungsfolie 22 weist an einem vorderen Ende 28 einen vorderen, führungsstegseitigen Abschnitt 22a, an dem das untere Ende des Führungssteges 10 befestigt ist. An den Abschnitt 22a schließt sich ein hinterer Abschnitt 22b der Befestigungsfolie 22 an. Der hintere Abschnitt 22b dient zur Befestigung an der hinteren Seitenscheibe 11.

Unterhalb der Befestigungsfolie 22 ist in der hinteren Seitenscheibe 11 eine Durchgangsöffnung 24 ausgebildet, die über eine Schraubverbindung 25 mit einer nicht weiter dargestellten Betätigungsvorrichtung 26 zum Bewegen der hinteren Seitenscheibe 11 aus der ausgefahrenen Position 14 in eine nicht dargestellte eingefahrene Position und zurück dient.

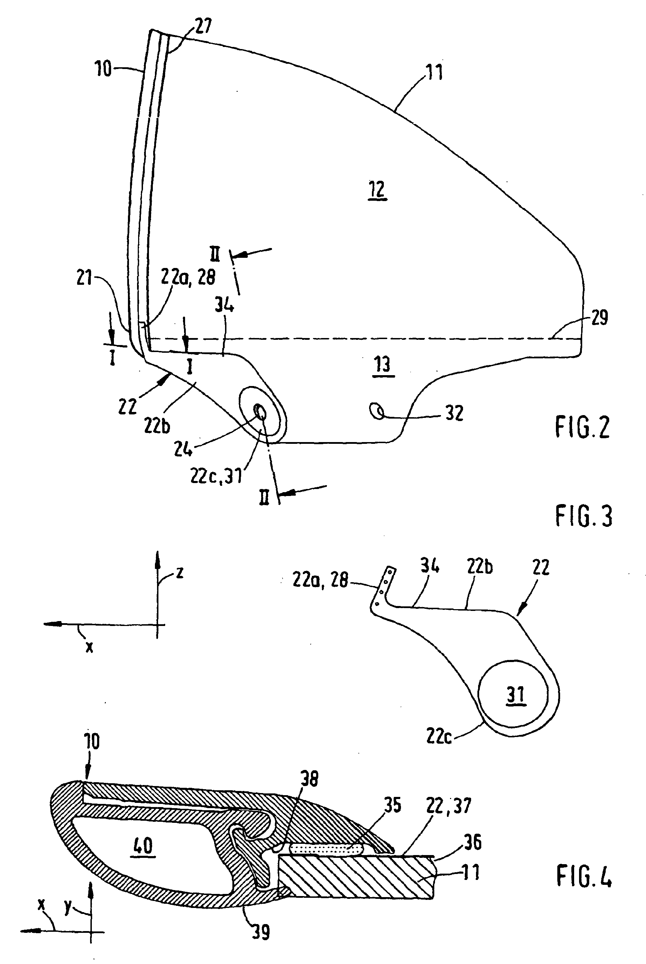

Die Fig. 2 zeigt eine Darstellung der hinteren Seitenscheibe 11. An einem vorderen Rand 27 der Seitenscheibe 11 ist der Führungssteg 10 befestigt. An dem unteren Ende 21 des Führungssteges 10 ist ein vorderes Ende 28 der Befestigungsfolie 22 mit dem unteren Ende 21 des Führungssteges 10 verbunden. Eine strichlierte Linie 29 kennzeichnet den Übergang vom sichtbaren Bereich 12 der hinteren Seitenscheibe 11 in den nicht sichtbaren Bereich 13 der hinteren Seitenscheibe 11.

Aus der Fig. 2 geht hervor, dass die Befestigungsfolie 22 im nicht sichtbaren Bereich 13 der hinteren Seitenscheibe 11 befestigt ist. Die Befestigungsfolie 22 weist einen Endabschnitt 22c auf, der sich an den hinteren Abschnitt 22b anschließt. Der Endabschnitt 22c ist mit einer kreisförmigen Aussparung 31 versehen. Die kreisförmige Aussparung 31 umgibt die Durchgangsöffnung 24 der hinteren Seitenscheibe 11.

An der hinteren Seitenscheibe 11 ist eine weitere Durchgangsöffnung 32 im nicht sichtbaren Bereich 13 der hinteren Seitenscheibe 11 vorgesehen, an der Teile der Betätigungsvorrichtung 26 angeordnet sind.

Die Fig. 3 zeigt die in der Fig. 2 gezeigte Befestigungsfolie 22. In dieser gezeigten Ausführungsform weist die Befestigungsfolie 22 einen hinteren Abschnitt 22b auf, der einen oberen Rand 34 hat, der in etwa waagrecht bzw. parallel zur strichlierten Linie 29 verläuft.

In der Fig. 4 ist eine Schnittansicht abgebildet, wobei der Schnitt längs der Linie I-I in der Fig. 2 verläuft. Aus der Schnittansicht geht die Anbindung der hinteren Seitenscheibe 11 über einen Klebstoff 35 mit dem Führungssteg 10 hervor.

In der gezeigten Ausführungsform ist auf einer zur Umgebung hin zeigenden Außenfläche 36 der hinteren Seitenscheibe 11 die Befestigungsfolie 22 geklebt. Zwischen der Außenfläche 36 der hinteren Seitenscheibe 11 bzw. einer Außenfläche 37 der Befestigungsfolie 22 ist der Klebstoff 35 beispielsweise in Form einer Raupe aufgetragen und mit einer Innenfläche 38 des Führungssteges 10 verbunden.

An dem Führungssteg 10 ist eine Dichtung 39 mit einem geschlossenen Hohlraum 40 befestigt. Die Dichtung 39 kommt in der ausgefahrenen Position 14 der hinteren Seitenscheibe 11 und in der ausgefahrenen Position 8 der vorderen Seitenscheibe 7 in Anlage an den hinteren Seitenrand 9 der vorderen Seitenscheibe 7.

Die Fig. 5 zeigt eine größere Darstellung einer hinteren Seitenscheibe 11 ähnlich der in der Fig. 2 dargestellten Seitenscheibe 11. In der Fig. 5 ist eine zweite Ausführungsform einer Befestigungsfolie 22 dargestellt, die sich dadurch unterscheidet, dass drei fingerförmige Abschnitte 23a, 23b und 23c vorgesehen sind. Im Unterschied zu der in der Fig. 2 dargestellten Befestigungsfolie 22 ist kein Endabschnitt 22c vorgesehen.

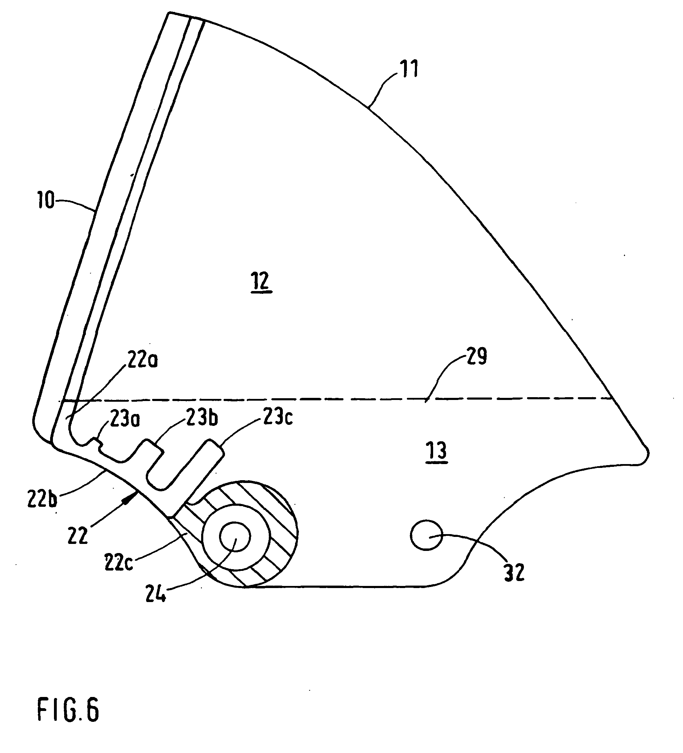

Die Fig. 6 entspricht der Darstellung in der Fig. 5 mit dem Unterschied, dass zusätzlich zu den fingerförmigen Abschnitten 23a, 23b und 23c ein ringförmiger Abschnitt 21 an der Befestigungsfolie 22 vorgesehen ist.

Die Fig. 7 zeigt eine Schnittansicht längs der Linie II-II in der Fig. 2. Die hintere Seitenscheibe 11 befindet sich in der ausgefahrenen Position 14. An der Durchgangsöffnung 18 am hinteren Karosserieabschnitt 16 sind beidseitig Dichtlippen 42, 43 vorgesehen. Die Dichtlippe 42 liegt an einer zu einem Fahrzeugraum gewandten Innenfläche 44 und die Dichtlippe 43 an der Außenfläche 37 der hinteren Seitenscheibe 11 an.

Die Schraubverbindung 25 weist in Bezug auf eine Symmetrieachse 45 eine radiale Erstreckung D₂₅ auf. Ein Innendurchmesser d₃₁ der Befestigungsfolie 22 ist größer als die in etwa kreisförmige Fläche der Schraubverbindung 25 mit der radialen Erstreckung D₂₅.

Die Fig. 8 zeigt einen Zustand, bei dem die hintere Seitenscheibe 11 zerstört wurde. An der Befestigungsfolie 22 bleiben Glasreste der hinteren Seitenscheibe 11 kleben. Durch die Verbindung des vorderen Endes 28 der Befestigungsfolie 22 am unteren Ende 21 des Führungssteges 10 bleibt der Führungssteg 10 am Karosserieabschnitt 16 angeordnet.

Die an der Befestigungsfolie 22 befindlichen Glasreste bilden einen Verdickungsabschnitt 46 mit einem Außendurchmesser oder einer Dicke t. Die Größe und/oder Form der Befestigungsfolie 22 ist so ausgelegt, dass der sich bildende Verdickungsabschnitt 46 eine Dicke t hat, die größer ist als die Spaltbreite b der in den Hohlraum 15 des Karosserieabschnittes 16 führenden Durchgangsöffnung 18. Damit bleibt der Führungssteg 10 auch nach einer Zerstörung der hinteren Seitenscheibe 11 an seinem Anbringungsort mit der Karosserie verbunden.

Kerngedanke der Erfindung ist es, dass nach einer unfallbedingten Zerstörung der hinteren Seitenscheibe 11 der Führungssteg 10 an der Karosserie 2 des Kraftfahrzeugs fixiert bleibt. Dies wird erfindungsgemäß dadurch erreicht, dass nach der Zerstörung der hinteren Seitenscheibe 11 Glasreste in Form von Glassplittern an der Befestigungsfolie 22 haften bleiben. Glasreste und Befestigungsfolie 22 bilden hierdurch den Verdickungsabschnitt 46, der nicht durch die Durchgangsöffnung 18 des Karosserieabschnitts 16 hindurch treten kann. Das Zurückhalten der Befestigungsfolie 22 wird durch das Verhaken der Glasreste mit den Dichtlippen 42 bzw. 43 unterstützt. Die Befestigungsfolie 22 kann hierbei an der Außenfläche 36 und/oder an der Innenfläche der hinteren Seitenscheibe 11 angeordnet sein.

Das erfindungsgemäße Prinzip funktioniert selbstverständlich auch bei einer Befestigungsfolie 22 ohne fingerförmige Abschnitte 23a, 23b und 23c, die bei einer Zerstörung der hinteren Seitenscheibe 11 umklappen und somit die Dicke t des Verdickungsabschnitts 46 vergrößern. In gleicher Weise ist die Wirkung der Erfindung gegeben, wenn die Befestigungsfolie 22 keine kreisförmige Aussparung 31 im Bereich der Schraubverbindung 25 aufweist. Die Aussparung 31 ist lediglich als zusätzliche Fixierung der Befestigungsfolie 22 an der Karosserie 2 des Kraftfahrzeugs ausgelegt.

## Patentansprüche

1. Kraftfahrzeug mit hinteren Seitenscheiben, wobei die jeweilige hintere Seitenscheibe (11) über einen Führungssteg (10) an einen hinteren Rand einer vorderen Seitenscheibe angrenzt, wenn die vordere Seitenscheibe (7) und die hintere Seitenscheibe (11) sich in einer ausgefahrenen Position befinden, wobei die jeweilige hintere Seitenscheibe (11) in der ausgefahrenen Position einen sichtbaren Bereiche (12) aufweist, während ein nicht sichtbarer Bereich (13) der hinteren Seitenscheibe (11) in einem Hohlraum (15) eines Karosseriebauteils angeordnet ist,
**dadurch gekennzeichnet, dass** an einer Fläche (37, 44) der hinteren Seitenscheibe (11), die im nicht sichtbaren Bereich (13) der hinteren Seitenscheibe (11) liegt, und die benachbart zu dem Führungssteg (10) liegt, eine Befestigungsfolie (22) aufgeklebt ist, die mit dem Führungssteg (10) verbunden ist.

2. Kraftfahrzeug nach Anspruch 1,
**dadurch gekennzeichnet, dass** die Befestigungsfolie (22) an einem vorderen Ende (28) einen vorderen, führungsstegseitigen Abschnitt (22a) aufweist ist, an dem ein unteres Ende (21) des Führungssteges (10) befestigt ist und dass sich an den vorderen Abschnitt (22a) ein hinterer Abschnitt (22b) der Befestigungsfolie (22) anschließt, der zur Befestigung an der hinteren Seitenscheibe (11) dient.

3. Kraftfahrzeug nach den Ansprüchen 1 oder 2, **dadurch gekennzeichnet, dass** die Befestigungsfolie (22) so ausgelegt ist, dass nach einer Zerstörung der hinteren Seitenscheibe (11) an der Befestigungsfolie (22) Glasreste kleben bleiben, die einen Verdickungsabschnitt (46) bilden, dass die Größe und/oder Form der Befestigungsfolie (22) so ausgelegt ist, dass der sich bildende Verdickungsabschnitt (46) eine Dicke t hat, die größer ist als eine Spaltbreite b einer in den Hohlraum (15) des Karosserieabschnittes (16) führenden Durchgangsöffnung (18).

4. Kraftfahrzeug nach den Ansprüchen 2 oder 3,
**dadurch gekennzeichnet, dass** der hintere Abschnitt (22b) der Befestigungsfolie (22) nach einer Zerstörung der hinteren Seitenscheibe (11) den Verdickungsabschnitt (46) bildet.

5. Kraftfahrzeug nach einem der vorhergehenden Ansprüche,
**dadurch gekennzeichnet, dass** in der hinteren Seitenscheibe (11) eine Durchgangsöffnung (24) im nicht sichtbaren Bereich (13) der hinteren Seitenscheibe (11) ausgebildet ist und dass in der Durchgangsöffnung (24) eine Schraubverbindung (25) angeordnet ist, die mit einer Betätigungsvorrichtung (26) zum Bewegen der hinteren Seitenscheibe (11) zwischen der ausgefahrenen Position (14) und einer eingefahrenen Position verbunden ist.

6. Kraftfahrzeug nach einem der vorhergehenden Ansprüche,
**dadurch gekennzeichnet, dass** die Befestigungsfolie (22) einen Endabschnitt (22c) aufweist, der sich an den hinteren Abschnitt (22b) der Befestigungsfolie (22) anschließt und dass der Endabschnitt (22c) eine kreisförmige Aussparung (31) aufweist.

7. Kraftfahrzeug nach Anspruch 6,
**dadurch gekennzeichnet, dass** ein Innendurchmesser d₃₁ der kreisförmigen Aussparung (31) größer als ein Außendurchmesser D₂₅ der Schraubverbindung (25) ist.

8. Kraftfahrzeug nach den Ansprüchen 6 oder 7,
**dadurch gekennzeichnet, dass** die kreisförmige Aussparung (31) der Befestigungsfolie (22) beabstandet zu der Schraubverbindung (25) angeordnet ist.

9. Kraftfahrzeug nach Anspruch 8,
**dadurch gekennzeichnet, dass** die kreisförmige Aussparung (31) der Befestigungsfolie (22) zentrisch zu der Schraubverbindung (25) angeordnet ist.

10. Kraftfahrzeug nach einem der Ansprüche 2 bis 9,
**dadurch gekennzeichnet, dass** der hintere Abschnitt (22b) der Befestigungsfolie (22) fingerförmige Abschnitte (23a, 23b, 23c) aufweist.

11. Kraftfahrzeug nach einem der Ansprüche 2 bis 9,
**dadurch gekennzeichnet, dass** der hintere Abschnitt (22b) der Befestigungsfolie (22) eine geschlossene Fläche aufweist.

12. Kraftfahrzeug nach einem der vorhergehenden Ansprüche,
**dadurch gekennzeichnet, dass** die Befestigungsfolie (22) aus Polyester oder Polyurethan hergestellt ist.

## Claims

1. A Motor vehicle with rear side windows, the respective rear side window (11) adjoining, via a guide web (10), a rear edge of a front side window, when the front side window (7) and the rear side window (11) are in a raised position, wherein the respective rear side window (11) has a visible region (12) in the raised position, while a non-visible region (13) of the rear side window (11) is arranged in a cavity (15) of a body component,
**characterised in that** a fastening film (22) is glued to a face (37, 44) of the rear side window (11), which is located in the non-visible region (13) of the rear side window (11), and is adjacent to the guide web (10), said fastening film being connected to the guide web (10).

2. A Motor vehicle according to claim 1,
**characterised in that** the fastening film (22), at a front end (28), has a front, guide web-side portion (22a), to which a lower end (21) of the guide web (10) is fastened and **in that** a rear portion (22b) of the fastening film (22) adjoins the front portion (22a) and is used for fastening to the rear side window (11).

3. A Motor vehicle according to either of claims 1 or 2,
**characterised in that** the fastening film (22) is designed such that after destruction of the rear side window (11), glass remnants remain adhering to the fastening film (22) and form a thickening portion (46), **in that** the size and/or the shape of the fastening film (22) is designed such that the forming thickening portion (46) has a thickness t, which is greater than a gap width b of a through-opening (18) leading into the cavity (15) of the body portion (16).

4. A Motor vehicle according to claims 2 or 3,
**characterised in that** the rear portion (22b) of the fastening film (22), after destruction of the rear side window (11), forms the thickening portion (46).

5. A Motor vehicle according to any one of the preceding claims,
**characterised in that**, in the rear side window (11), a through-opening (24) is formed in the non-visible region (13) of the rear side window (11) and **in that** a screw connection (25) is arranged in the through-opening (24), which is connected to an actuating device (26) to move the rear side window (11) between the raised position (14) and a retracted position.

6. A Motor vehicle according to any one of the preceding claims,
**characterised in that** the fastening film (22) has an end portion (22c), which adjoins the rear portion (22b) of the fastening film (22) and **in that** the end portion (22c) has a circular recess (31).

7. A Motor vehicle according to claim 6,
**characterised in that** an internal diameter d₃₁ of the circular recess (31) is greater than an external diameter D₂₅ of the screw connection (25).

8. A Motor vehicle according to claims 6 or 7,
**characterised in that** the circular recess (31) of the fastening film (22) is arranged spaced apart from the screw connection (25).

9. A Motor vehicle according to claim 8,
**characterised in that** the circular recess (31) of the fastening film (22) is arranged centrally with respect to the screw connection (25).

10. A Motor vehicle according to any one of claims 2 to 9,
**characterised in that** the rear portion (22b) of the fastening film (22) has finger-shaped portions (23a, 23b, 23c).

11. A Motor vehicle according to any one of claims 2 to 9,
**characterised in that** the rear portion (22b) of the fastening film (22) has a closed face.

12. A Motor vehicle according to any one of the preceding claims,
**characterised in that** the fastening film (22) is produced from polyester or polyurethane.

## Revendications

1. Véhicule automobile comportant des vitres latérales arrière, selon lequel,
chaque vitre latérale arrière (11) est délimitée par une entretoise de guidage (10) au niveau du bord arrière d'une vitre latérale avant lorsque la vitre latérale avant (7) et la vitre latérale arrière (11) se trouvent en position sortie,
la vitre latérale arrière (11) en position sortie, comporte une zone apparente (12) alors qu'une zone (13) non apparente de la vitre latérale arrière (11) se trouve dans une cavité (15) d'une partie de la carrosserie,
**caractérisé en ce que**
un film de fixation (22) est collé sur une surface (37, 44) de la vitre latérale arrière (11) située dans sa zone non apparente (13) et voisine de l'entretoise de guidage (10), ce film étant relié à l'entretoise de guidage (10).

2. Véhicule automobile selon la revendication 1,
**caractérisé en ce que**
à son extrémité avant (28) le film de fixation (22) comporte un segment avant (22a), du côté de l'entretoise de guidage, auquel est fixée l'extrémité inférieure (21) de l'entretoise de guidage (10), et
le segment avant (22a) se poursuit par un segment arrière (22b) du film de fixation (22) servant à sa fixation à la vitre latérale arrière (11).

3. Véhicule automobile selon la revendication 1 ou 2,
**caractérisé en ce que**
le film de fixation (22) est conçu pour qu'après la destruction de la vitre latérale arrière (11), des restes de vitre sont collés au film de fixation (22) qui constitue un segment de renforcement (46),
la dimension et/ou la forme du film de fixation (22) sont conçues pour que le segment de renforcement (46) qui se forme a une épaisseur (t) supérieure à la largeur (b) de l'intervalle d'un orifice de passage (18) débouchant dans la cavité (15) du segment de carrosserie (16).

4. Véhicule automobile selon la revendication 2 ou 3,
**caractérisé en ce que**
le segment arrière (22b) du film de fixation (22) constitue un segment de renforcement (46) après destruction de la vitre latérale arrière (11).

5. Véhicule automobile selon les revendications précédentes,
**caractérisé par**
un orifice de passage (24) réalisé dans la zone non apparente (13) de la vitre latérale arrière (11), et
une liaison vissée (25) est prévue dans l'orifice de passage (24), cette liaison étant reliée à un dispositif d'actionnement (26) pour déplacer la vitre latérale arrière (11) entre sa position déployée (14) et sa position rentrée.

6. Véhicule automobile selon les revendications précédentes,
**caractérisé en ce que**
le film de fixation (22) comporte un segment d'extrémité (22c) qui rejoint le segment arrière (22b) du film de fixation (22), et
le segment d'extrémité (22c) a une découpe circulaire (31).

7. Véhicule automobile selon la revendication 6,
**caractérisé en ce que**
le diamètre intérieur d₃ de la découpe circulaire (31) est supérieur au diamètre extérieur D₂₅ de la liaison vissée (25).

8. Véhicule automobile selon la revendication 6 ou 7,
**caractérisé en ce que**
la découpe circulaire (31) du film de fixation (22) est écartée de la liaison vissée (25).

9. Véhicule automobile selon la revendication 8,
**caractérisé en ce que**
la découpe circulaire (31) du film de fixation (22) est centrée sur la liaison vissée (25).

10. Véhicule automobile selon les revendications 2 à 9
**caractérisé en ce que**
le segment arrière (22b) du film de fixation (22) comporte des segments (23a, 23b, 23c) en forme de doigts.

11. Véhicule automobile selon les revendications 2 à 9,
**caractérisé en ce que**
le segment arrière (22b) du film de fixation (22) comporte une surface fermée.

12. Véhicule automobile selon les revendications précédentes,
**caractérisé en ce que**
le film de fixation (22) est en polyester ou en polyuréthane.
